# EUROPEAN PATENT APPLICATION

(11) **EP 0 885 818 A1**
(43) Date of publication of application: **23.12.1998**
(21) Application number: 98304858.8
(22) Date of filing: 19.06.1998
(51) Int. Cl.: B65G 13/07, B65G 47/26

(54) **Live roller conveyor**

(30) Priority: 21.06.1997 GB 9713061
(71) Applicant: CONVEYOR UNITS LIMITED, Stourport-on-Severn Worcestershire DY13 9PT (GB)
(72) Inventor: Toye, Edward William, Nr Kidderminster DY14 9DL (GB)
(74) Representative: Leach, John Nigel

(57) **Abstract**

A clutch means for drivably connecting a drive shaft (13) and a sleeve shaft (14) where the sleeve is rotationally mounted concentric with said drive shaft, the clutch means comprising a first clutch plate (23) fixedly attached to one shaft, a second clutch plate (28) non-rotatably attached to the other of said shafts and axially moveable relative thereto, and thrust means (34) responsive to an operating means to bring the first clutch plate (23) and second clutch plate (28) into torque transmitting abutment.

## Description

This invention relates to live roller conveyors, comprising a plurality of conveyor sections, at least some of said conveyor sections hereinafter referred to as the kind specified, each comprising a plurality of rollers, said rollers providing a conveying surface, and drive means to drive at least some of the rollers.

When a plurality of objects, for example pallets aie being carried by a conveyor, it is desirable that they do not collide. This may occur when, for example, one object has reached the unloading section of the conveyor and is stationary while the other conveyed objects are still in motion.

An object of the invention is to provide a new or improved conveyor.

According to a first aspect of the invention, we provide a clutch means for drivably connecting a drive shaft and a sleeve shaft where the sleeve shaft is rotationally mounted concentric with said drive shaft, the clutch means comprising a first clutch plate fixedly attached to one of said shafts, a second clutch plate non-rotatably attached to the other of said shafts and axially moveable relative thereto, and thrust means to bring the first clutch plate and second clutch plate into torque transmitting abutment.

The clutch means may comprise a clutch housing mounted on said other of said shafts and non-rotatably keyed thereto, the second clutch plate being provided with a peg received in a generally axially extending aperture in said clutch housing.

The clutch means may comprise biasing means to bias the second clutch plate and the first clutch plate in a non-abutting position.

The biasing means may be disposed within the longitudinally extending aperture and act upon said peg.

A friction element may be disposed between the first clutch plate and the second clutch plate.

The thrust means may comprise a thrust plate which is moveable axially relative to said other of said shafts to force the second clutch plate into abutment with the first clutch plate.

A thrust bearing may be interposed between the thrust plate and the second clutch plate.

The thrust means may further comprise actuating means to move the thrust plate in a generally axial direction.

Said actuating means may comprise a pneumatic actuator responsive to an operating means biased to a first position wherein the clutch means is disengaged and moveable to a second position wherein the clutch means is engaged.

Said one shaft may be the sleeve shaft and said other of said shafts may be the drive shaft.

According to a second aspect of the invention we provide a conveyor section of the kind specified, said drive means comprising a drive shaft extending longitudinally of said conveyor section and a sleeve shaft rotationally mounted concentric with said drive shaft, and connecting means engageable drivingly to connect said drive shaft and said sleeve shaft.

Said connecting means may comprise a clutch means according to the first aspect of the invention.

Rotation may be imparted to said at least some of the rollers by means of a friction drive between the sleeve shaft and said at least some rollers.

The friction drive may comprise an elastomeric belt which engages the sleeve shaft and one of said at least some rollers.

Where said connecting means is a clutch means according to the first aspect of the invention, said operating means may comprise a pneumatic system.

The pneumatic actuator may be in continuous connection with a pneumatic supply to hold the pneumatic actuator in its second position unless said operating means is activated to disconnect said pneumatic actuator from the pneumatic supply.

Said operating means may be activated to disconnect said pneumatic actuator from the pneumatic supply in response to a sensor means.

The sensor means may comprise a switch means which generates a first signal in response to the presence of an article on the corresponding conveyor section.

Said operating means may be activated to disconnect said pneumatic actuator from the pneumatic supply only if a first signal is generated by the sensor means and a second signal is received by said operating means.

Said first signal and said second signal may comprise pneumatic signals

Manually operable means may be provided to disengage the conveyor section from the drive means.

According to a third aspect of the invention we provide a live roller conveyor comprising a plurality of conveyor sections of the kind specified.

At least some of said conveyor sections may comprise conveyor sections according to the second aspect of the invention.

At least some of said conveyor sections may comprise clutch means according to the first aspect of the invention.

The drive means may comprise a common drive shaft extending longitudinally of the conveyor sections.

Where said at least some conveyor sections according to the second aspect of the invention comprise operating means, said second signal may comprise said first signal from a succeeding conveyor section. Hence, the rollers of a conveyor section are disconnected from the drive means if an article is detected both on the conveyor section itself and the succeeding conveyor section, thus avoiding collision.

Alternatively, where the conveyor section is the final conveyor section, said second signal may be generated by an end sensor provided on the final conveyor section.

The present invention avoids the need to use a separate geared motor for each conveyor section as has hitherto been necessary. By using a single geared motor with the above described invention to control a plurality of conveyor sections the expense and complexity of a plurality of geared motors is avoided so that the conveyor of the present invention is more economical.

In addition by utilising a belt drive as described hereinbefore a relatively soft start facility is provided which is particularly useful when dealing with relatively heavy and fragile loads. The belt drive also provides a safety feature should movement of a load inadvertently be obstructed.

The invention will now be described by way of example only with reference to the accompanying figures, wherein;
FIGURE 1a is a fragmentary side view of a live roller conveyor embodying the invention.
FIGURE 1b is a plan view of the live roller conveyor of Figure 1a,
FIGURE 2 is a fragmentary perspective view to an enlarged scale, of part of the conveyor of Figure 1 showing a region at the junction of two conveyor sections,
FIGURE 3 is a fragmentary longitudinal cross-section through a clutch means of the conveyor of Figure 1,
FIGURE 4 is a lateral cross-section through line 4-4 on Figure 3, and
FIGURE 5 is a fragmentary longitudinal cross-section through line 5-5 on Figure 3,
FIGURE 6 is a plan view of the clutch means of Figure 3,
FIGURE 7 is a schematic diagram of a pneumatic control system of the conveyor of Figure 1.

In all Figures, the clutch is shown in its engaged position.

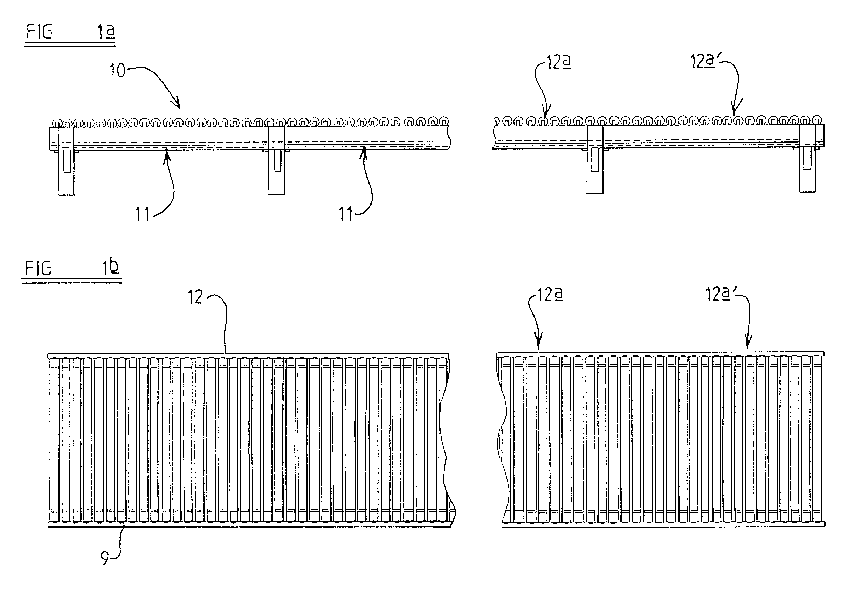

Referring now to Figure 1a and 1b, a live roller conveyor 10 comprises a plurality of live roller conveyor sections. Each conveyor section 11 comprises a pair of spaced parallel side members 9 between which a plurality of rollers 12 are rotatably carried. One of the rollers provides a sensing roller 12a responsive to the presence of a pallet on that conveyor section.

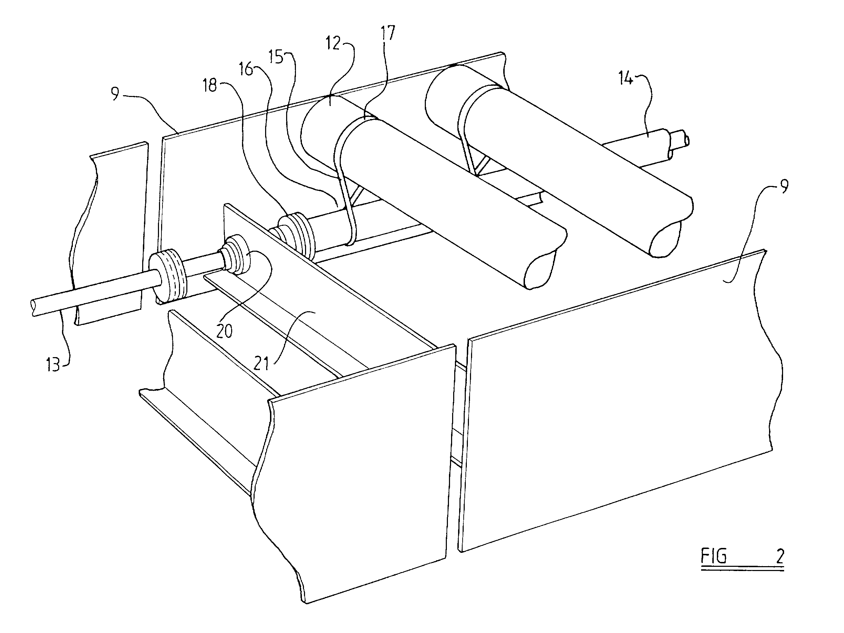

As seen in Figure 2, drive is supplied to the rollers 12 of the conveyor section 11 by a drive shaft 13 which is common to all conveyor sections and is referred to hereinafter as a common drive shaft. Each conveyor section 11 comprises a separate sleeve shaft 14 clutchable to the common drive shaft 13 by clutch means 18. Drive is conveyed from the sleeve shaft 14 to each roller 12 by a friction drive comprising an elastomeric belt 15 having a 90° twist. The drive shaft 13 and sleeve shaft 14 extend generally longitudinally of the conveyor section 11 while the rollers 12 extend generally transverse to the conveyor section. The belt 15 is received in a groove 17 provided in each roller 12.

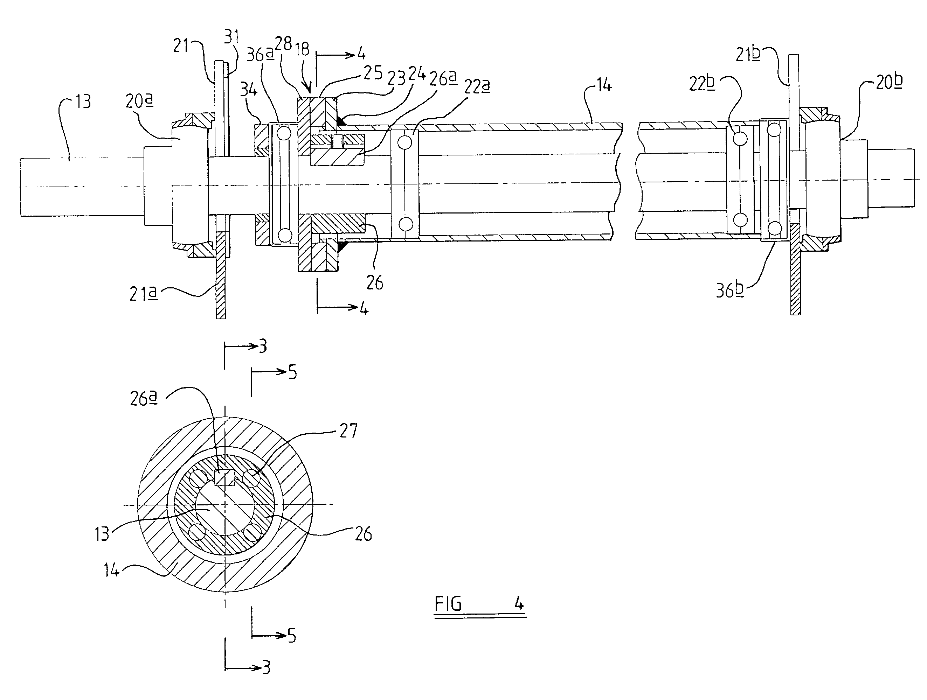

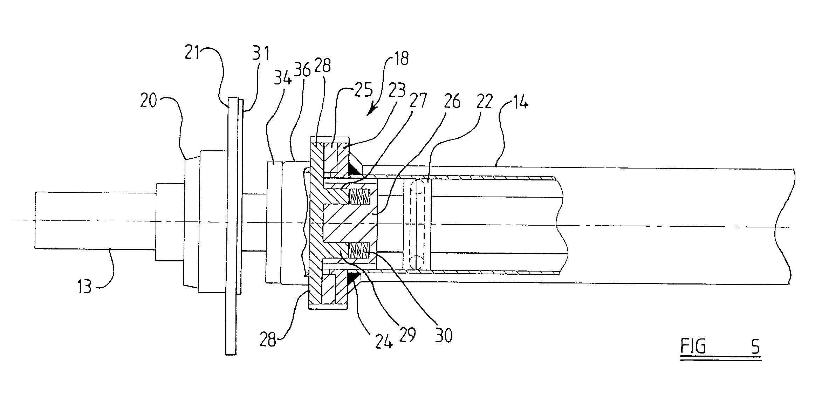

Referring now to Figure 3, the common drive shaft 13 is received in bearing 20a, 20b mounted on cross braces 21a, 21b which extend between the side members 9 generally transverse to the conveyor. Each sleeve shaft 14 is rotatably mounted concentric with the drive shaft 13 by means of bearings 22a, 22b and at its end it comprises a first clutch plate 23 which is welded thereto by weld 24. Attached to the first clutch plate 23 is a friction pad 25. A clutch housing 26 is mounted on tlie common drive shaft 13 and is non-rotatably keyed thereto by a key 26a. The clutch housing 26 comprises four apertures 27, best shown in Figure 4, disposed equidistantly around a circumference of the clutch housing 26 and at equal distances from the centre of drive shaft 13. The apertures 27 are open on the face of the clutch housing 26 which faces away from the sleeve shaft 14, and extend parallel to the axis of the drive shaft 13. A second clutch plate 28 is disposed concentric with the drive shaft 13 and comprises four projections 29 which are received in the apertures 27 of the clutch housing 26, as shown in the cut away section of Figure 5. Disposed within the apertures 27 are resilient biasing means 30, comprising coil compression springs which act to bias the second clutch plate 28 in a direction away from the clutch housing 26. The projections 29 are retained within the apertures 27 at all times and hence the second clutch plate 28 is compelled to rotate with the drive shaft 13.

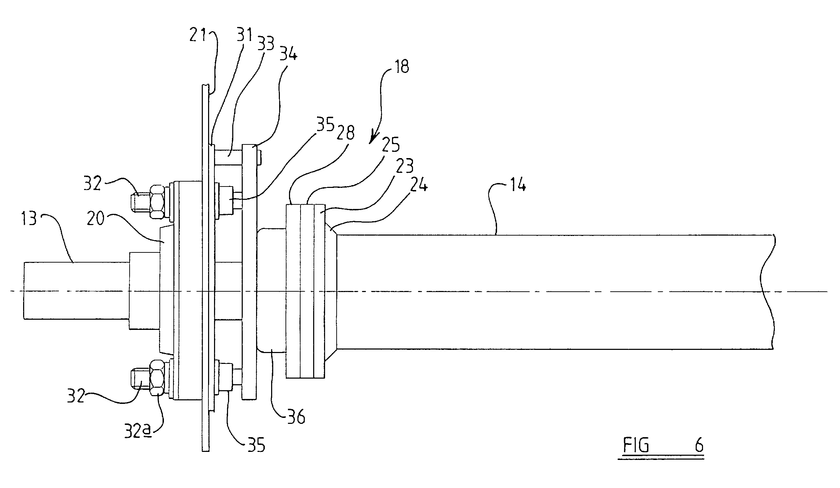

As shown in plan view in Figure 6, the clutch further comprises a cylinder mounting plate 31 disposed adjacent the cross brace 21a. Pegs 32 project through apertures in the cross brace 21a and bearing 20a and are threaded to receive a nut 32a to hold the bearing 20a, cross brace 21a and cylinder mounting plate 31 in close abutment. A further peg 33 extends in a direction opposed to that of pegs 32. The further peg 33 is received in an aperture in the thrust plate 34 such that the thrust plate 34 is slidably moveable relative thereto. Disposed between the cylinder mounting plate 31 and the thrust plate 34 are actuators 35. A thrust bearing 36a is disposed between the thrust plate 34 and the second clutch plate 28. while a further thrust bearing 36b is disposed between the cross brace 21b and the sleeve shaft 14.

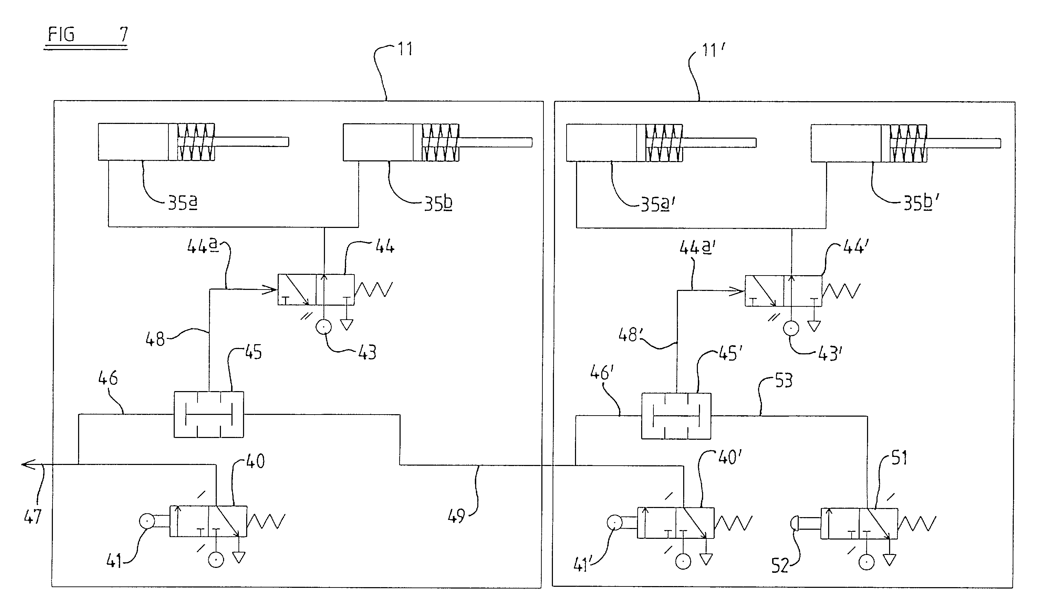

Figure 7 is a schematic illustration of pneumatic circuitry for a pair of adjacent live roller conveyor sections 11. Articles on the conveyor will travel from conveyor section 11 to conveyor 11'. Equivalent features on each conveyor section have the same reference numeral with those of the conveyor section 11' having a prime sign.

The sensor means 40, 40' have actuating means 41, 41' which are responsive to the sensing rollers 12a, 12a' located in the conveying surface. The pneumatic actuators shown diagrammatically at 35a, 35b, 35a', 35b' are connected to a pneumatic pressure source 43, 43' via a switch means 44, 44'. In their normal operating positions, switches 44, 44' are open such that the cylinders 35a, 35b, 35a', 35b' are pressurised and the clutches are all engaged on each section. When a pneumatic signal is supplied to the input 44a, 44a' on line 48, 48' the switch means 44, 44' move to a second position, where the actuators 35a, 35b, 35a', 35b' are disconnected from pneumatic pressure supply 43, 43'. As seen in Figure 3, when the actuators 35 are not pressurised the resilient biasing means 30 will return to their biased position, pushing the second clutch plate 28 to the left as seen in Figure 3 and disengaging it from the friction pad 25. The sleeve shaft 14 will thus no longer be in torque transmitting relationship with the common drive shaft 13 and the rollers 12 of that roller section 11 will stop. The thrust bearing 36b and cross brace 21b prevent the sleeve shaft 14 from moving to the right as seen in Figure 3 in response either to the resilient biasing means 30 or to the force from the actuators 33 transmitted via the first clutch plate 23 and second clutch plate 28.

The sensing means 40, 40' are connected to the output of valve 45, 45'. A first input of valves 45, 45' is connected to sensing means 40, 40' by lines 46, 46'. A second input on valve 45 is connected to sensing means 40' by line 49 and similarly a second input on valve 45' is connected to an end sensing means 51 by line 53. A further output 47 connects sensing means 40 to the equivalent of valve 45 on the conveyor section upstream of conveyor section 39. The valves 45, 45' operate such that a pneumatic signal is only transmitted on lines 48, 48' when a pneumatic signal is received at both inputs.

In operation with no pallet present on the conveyor, the switch means 44, 44' are in the position shown in Figure 7. The actuators 35 are thus connected to the pneumatic pressure source and hence displace the thrust plate 34 and the thrust bearing 36a to the right as seen in Figure 3, pushing against the second clutch plate 28 and urging it into abutment with the friction pad 25 such that the clutch means 18 of each conveyor section 11 is engaged.

The first conveyor section 11 of the conveyor 10 is provided with a manually operable pneumatic control button (not shown) to disengage the clutch unit and enabling a pallet to be loaded thereon. When the pallet is loaded, the clutch is then re-engaged and the pallet will travel along the conveyor. As it passes along the conveyor section 11, the pallet will activate the sensing means 40. This will supply a pneumatic signal to one input of the valve 45 on line 46 but since there is no pneumatic signal on line 49, no pneumatic signal is supplied on line 48, switch 44 remains in its original position and the clutch remains engaged. On reaching the end conveyor section 11', the pallet will contact sensing roller 41', sending a pneumatic signal on line 49. Since valve 45' will only receive a pneumatic signal at one input, no pneumatic signal will be sent on line 49' and the clutch means will remain engaged. The pallet will continue to move along the conveyor until it abuts sensor 52 of end sensing means 51. The sensing means 52 will send a pneumatic signal on line 53. The valve 45' will have a pneumatic signal at both inputs, so a pneumatic signal will be sent on line 50 to valve 44'. depressurising the actuators 35a', 35b' and disengaging the clutch means. The end section is supplied with a pneumatic control (not shown) which enables the pallet to the unloaded from the conveyor section with the rollers remaining deactivated.

When a pallet is present on the conveyor section 11', a pneumatic signal will be supplied on line 49. If a second pallet arrives on conveyor section 11 it will actuate sensing means 40. Valve 45 will be supplied a pneumatic signal at both inputs and so a pneumatic signal will be supplied on line 48. Switch 44 will be switched by the pneumatic signal on line 49 to its second position, disconnecting actuator 35a, 35b from pneumatic pressure source 43 and disengaging the clutch.

The pallet will thus be retained on that conveyor section, and the rollers will not re-engage until the sensor means 40' on the conveyor section 39' detects that there is no pallet present. With no pneumatic signal on line 49, the valve 45 will cut off the pneumatic signal to valve 44, allowing the clutch to re-engage and the pallet to resume movement along the conveyor.

The live roller conveyor may thus comprise any number of conveyor sections, and the pneumatic control system will prevent any collision between pallets on any of the sections in similar manner.

The present invention avoids the need to use a separate geared motor for each conveyor section as has hitherto been necessary. By using a single geared motor with the above described invention to control a plurality of conveyor sections the expense and complexity of plurality of geared motors is avoided so that the conveyor of the present invention is more economical.

In addition by utilising a belt drive as described hereinbefore a relatively soft start facility is provided which is particularly useful when dealing with relatively heavy and fragile loads. The belt drive also provides a safety feature should movement of a load inadvertently be obstructed.

The features disclosed in the foregoing description, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. A clutch means for drivably connecting a drive shaft and a sleeve shaft where the sleeve is rotationally mounted concentric with said drive shaft, the clutch means comprising a first clutch plate fixedly attached to one shaft, a second clutch plate non-rotatably attached to the other of said shafts and axially moveable relative thereto, and thrust means responsive to an operating means to bring the first clutch plate and second clutch plate into torque transmitting abutment.

2. A clutch means according to Claim 1 comprising a clutch housing mounted on said other of said shafts and non-rotatably keyed thereto.

3. A clutch means according to Claim 1 or Claim 2 wherein the second clutch plate is provided with a peg received in a generally axially extending aperture in said clutch housing.

4. A clutch means according to Claim 3 wherein the clutch means comprises biasing means to bias the second clutch plate and the first clutch plate in a non-abutting position.

5. A clutch means according to Claim 4 wherein the biasing means are disposed within the longitudinally extending aperture and act upon said peg.

6. A clutch means according to any one of the preceding claims wherein a friction element is disposed between the first clutch plate and the second clutch plate

7. A clutch means according to any one of the preceding claims wherein the thrust means comprises a thrust plate which is moveable axially relative to the said other of said shafts to force the second clutch plate into torque transmitting connection with the first clutch plate.

8. A clutch means according to Claim 7 wherein a thrust bearing is interposed between the thrust plate and the second clutch plate.

9. A clutch means according to claim 7 or claim 8 wherein the thrust means further comprises actuating means to move the thrust plate in a generally axial direction.

10. A clutch means according to Claim 9 wherein said actuating means comprises a pneumatic actuator responsive to an operating means biased to a first position wherein the clutch means is disengaged and moveable to a second position wherein the clutch means is engaged.

11. A clutch means according to any one of the preceding Claims wherein said one shaft is the sleeve shaft and said other of said shafts is the drive shaft.

12. A conveyor section of the kind specified, said drive means comprising a drive shaft extending longitudinally of said conveyor section and a sleeve shaft rotationally mounted concentric with said drive shaft, and connecting means engageable to drivingly connect said drive shaft and said sleeve shaft.

13. A conveyor section according to Claim 12 wherein said connecting means comprises a clutch means according to the first aspect of the invention.

14. A conveyor section according to Claim 12 or Claim 13 wherein rotation is imparted to said at least some of the rollers by means of a friction drive between the sleeve shaft and said at least some rollers.

15. A conveyor section according to Claim 14 wherein the friction drive comprises an elastomeric belt which engages the sleeve shaft and one of said at least some rollers.

16. A conveyor section according to Claim 13 or one of Claims 14 or 15 where dependent directly or indirectly on Claim 12 wherein said operating means comprises a pneumatic system.

17. A conveyor section according to Claim 16 where dependent indirectly on Claim 10 wherein the pneumatic actuator is in continuous connection with a pneumatic supply to hold the pneumatic actuator in its second position unless said operating means is activated to disconnect said pneumatic actuator from the pneumatic supply.

18. A conveyor section according to Claim 17 wherein said operating means is operable to disconnect said pneumatic actuator from the pneumatic supply in response to a sensor means.

19. A conveyor section according to Claim 18 wherein the sensor means comprises a switch means which generates a first signal in response to the presence of an article on the conveyor section.

20. A conveyor section according to Claim 19 wherein said operating means is activated to disconnect said pneumatic actuator from the pneumatic supply only if a first signal is generated by the sensor means and a second signal is received by said operating means.

21. A conveyor section according to Claim 20 wherein said first signal and said second signal comprise pneumatic signals.

22. A conveyor section according to any one of Claims 12 to 21 wherein manually operable means are provided to disengage the conveyor section from the drive means.

23. A live roller conveyor comprising a plurality of conveyor sections of the kind specified.

24. A live roller conveyor according to Claim 23 wherein at least some of said conveyor sections comprise conveyor sections according to Claim 12.

25. A live roller conveyor according to Claim 24 wherein at least some of conveyor sections comprise conveyor sections according to any one of Claims 13 to 22.

26. A live roller conveyor according to any one of Claims 23 to 25 wherein the drive means comprises a common drive shaft extending longitudinally of the conveyor sections.

27. A live roller conveyor according to Claim 25 or Claim 26 where dependent indirectly on Claim 20 wherein said second signal comprises said first signal from a succeeding conveyor section.

28. A live roller conveyor according to Claim 25 or Claim 26 where dependent indirectly on Claim 20 and where the conveyor section is the final conveyor section wherein said second signal is generated by an end sensor provided on said final conveyor section.
